# EUROPEAN PATENT APPLICATION

(11) **EP 4 648 188 A1**
(43) Date of publication of application: **12.11.2025**
(21) Application number: 24775064.9
(22) Date of filing: 01.02.2024
(51) Int. Cl.: H01M 50/204, H01M 10/613, H01M 10/6554, H01M 50/30, H01M 50/502

(54) **BATTERY MODULE AND BATTERY PACK COMPRISING SAME**

(30) Priority: 22.03.2023 KR 20230037625
(71) Applicant: LG Energy Solution, Ltd., Seoul 07335 (KR)
(72) Inventor: KIM, Young Jin, Daejeon 34122 (KR); OH, Young Soo, Daejeon 34122 (KR)
(74) Representative: Plasseraud IP
(86) International application number: PCT/KR2024/001567
(87) International publication number: WO 2024/196016

(57) **Abstract**

The present disclosure relates to a battery module and a battery pack comprising the same, and more particularly, to a battery module that may be applied to types of vehicles that need batteries capable of bottom venting and top cooling and a battery pack comprising the same.

The battery module according to the present disclosure includes a battery cell assembly formed by stacking a plurality of battery cells, a heat dissipation layer disposed on a top side of the battery cell assembly and a busbar frame covering a first side where a lead of the battery cell assembly protrudes and a bottom side of the battery cell assembly.

## Description

### TECHNICAL FIELD

### CROSS-REFERENCE TO RELATED APPLICATIONS

The present application claims priority to Korean Patent Application No. 10-2023-0037625 filed on March 22, 2023 in the Republic of Korea, the disclosure of which is incorporated herein by reference.

### Technical Field

The present disclosure relates to a battery module and a battery pack comprising the same, and more particularly, to a battery module that may be applied to types of vehicles that need batteries capable of bottom venting and top cooling and a battery pack comprising the same.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Furthermore, with the technological development of, and increasing demand for, electronic mobile devices and electric vehicles using batteries, the demand for batteries as an energy source is rapidly increasing, and accordingly, many studies are being conducted on batteries that meet a variety of needs.

Batteries are gaining attention as an energy source in a wide range of products including mobile devices and electric vehicles. In particular, secondary batteries are regarded as a promising energy resource that can replace the existing products using fossil fuels, and do not produce by-products from the use of energy, so they are attracting attention as an eco-friendly energy source.

On the other hand, secondary batteries are also attracting attention as an energy source for electric vehicles (EV), hybrid electric vehicles (HEVs) and Plug-In HEV that are hailed as a solution for reducing air pollution from the existing vehicles using fossil fuels such as gasoline vehicles and diesel vehicles. That is, secondary batteries are used in the form of a battery pack including a plurality of battery modules.

In the conventional art, a battery module had a module structure suitable for top venting and bottom cooling battery structure. Accordingly, battery cells were secured to the inner bottom surface of the module through resin and vent holes was formed at the upper part to let flames and sparks go out upwards. However, in this case, it cannot be applied to a module structure optimized for bottom venting structure.

### SUMMARY

### TECHNICAL PROBLEM

To solve the above-described problem, the present disclosure is directed to providing a battery module that may be applied to types of vehicles that need batteries capable of bottom venting and top cooling and a battery pack comprising the same.

### TECHNICAL SOLUTION

A battery module according to an embodiment of the present disclosure includes a battery cell assembly formed by stacking a plurality of battery cells, a heat dissipation layer disposed on a top side of the battery cell assembly and a busbar frame covering a first side where a lead of the battery cell assembly protrudes and a bottom side of the battery cell assembly.

The heat dissipation layer may secure the battery cell assembly.

The battery module according to Embodiment 1 of the present disclosure may further include a mono frame accommodating the battery cell assembly, the heat dissipation layer and the busbar frame, and a discharge hole may be formed in a lower surface of the mono frame.

The battery module according to Embodiment 2 of the present disclosure may further include an upper frame covering the heat dissipation layer and a second side that is a side of the battery cell assembly in a length direction, and a lower frame coupled to the upper frame, and having a discharge hole.

The battery module according to Embodiment 1 and Embodiment 2 of the present disclosure may include a sealing portion on a side that faces the busbar frame to seal the battery cell.

The lead of the battery cell may be formed at a lower part of the first side close to the sealing portion.

The battery module may further include a connector at a higher position than a location at which the lead is coupled to the busbar frame.

The battery module according to Embodiment 1 and Embodiment 2 of the present disclosure may further include an end plate that is coupled to the first side.

The discharge hole may include a plurality of discharge holes.

A battery pack according to the present disclosure may include the battery module.

### ADVANTAGEOUS EFFECTS

The present disclosure relates to the battery module and the battery pack comprising the same, and specifically, may be applied to types of vehicles that need batteries capable of bottom venting and top cooling.

### BRIEF DESCRIPTION OF THE DRAWINGS

The accompanying drawings illustrate an exemplary embodiment of the present disclosure and together with the following detailed description, serve to provide a further understanding of the technical aspect of the present disclosure, and thus, the present disclosure should not be construed as being limited to the drawings.
FIG. 1 is a perspective view of a battery module according to an embodiment of the present disclosure.
FIG. 2 is an exploded view of a battery module according to Embodiment 1 of the present disclosure.
FIG. 3 is an exploded view of a battery module according to Embodiment 2 of the present disclosure.
FIG. 4 is a front view of a battery cell according to Embodiment 1 and Embodiment 2 of the present disclosure.
FIG. 5 is a perspective view of a busbar frame coupled to a first side of a battery module according to Embodiment 1 and Embodiment 2 of the present disclosure.

### DETAILED DESCRIPTION

Hereinafter, exemplary embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the present disclosure.

It should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

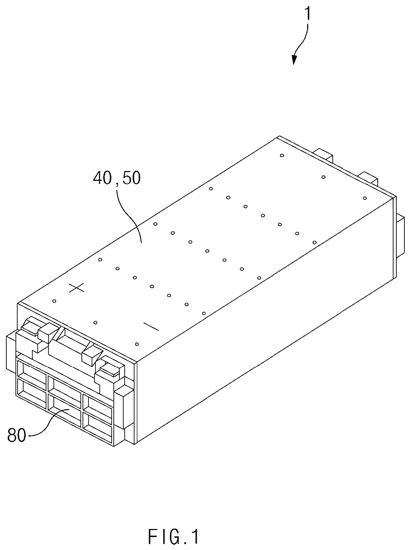

Hereinafter, a battery module 1 according to Embodiment 1 of the present disclosure will be described in detail with reference to FIGS. 1, 2, 4 and 5.

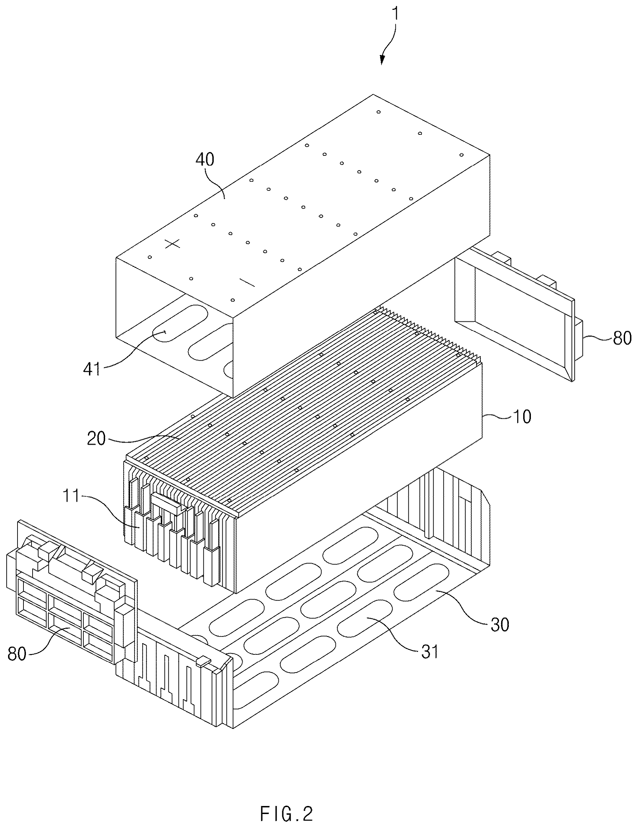

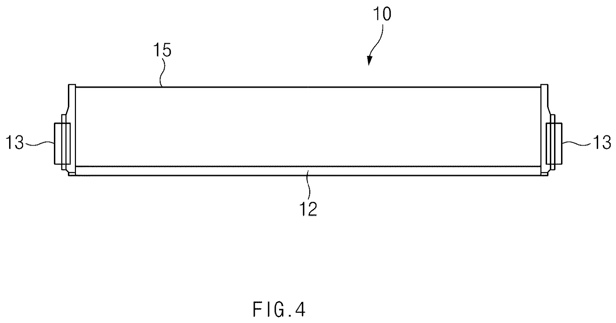

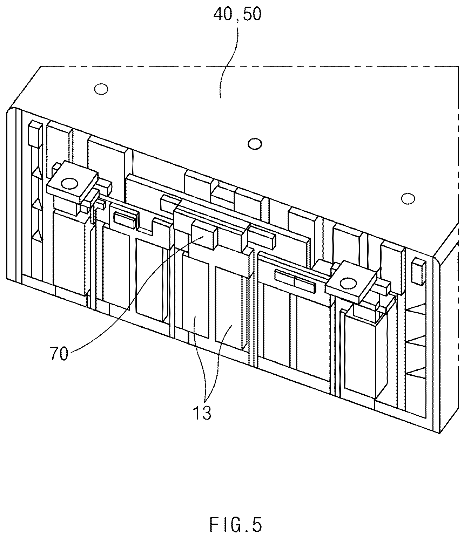

FIG. 1 is a perspective view of the battery module according to an embodiment of the present disclosure, FIG. 2 is an exploded view of the battery module according to Embodiment 1 of the present disclosure, FIG. 4 is a front view of a battery cell according to Embodiment 1 and Embodiment 2 of the present disclosure, and FIG. 5 is a perspective view of a busbar frame coupled to a first side of the battery module according to Embodiment 1 and Embodiment 2 of the present disclosure.

Referring to FIGS. 1, 2, 4 and 5, the battery module 1 according to Embodiment 1 of the present disclosure may include a battery cell assembly 10, a heat dissipation layer 20 and a busbar frame 30.

The battery cell assembly 10 may be formed by stacking a plurality of battery cells.

The heat dissipation layer 20 may be disposed on a top side of the battery cell assembly 10. The heat dissipation layer 20 may secure the battery cell assembly. The temperature of the battery cell assembly 10 may be lowered through the heat dissipation layer 20. A material of the heat dissipation layer 20 may be resin. The resin may be a non-crystalline solid or semisolid organic compound and derivatives, for example, natural resin or synthetic resin (plastics).

The busbar frame 30 may be disposed such that it covers the first side 11 where a lead 13 of the battery cell assembly 10 protrudes and a bottom side of the battery cell assembly 10. A busbar may be coupled to the busbar frame 30. The busbar frame 30 may also play a role in supporting the bottom side of the battery cell assembly 10. The busbar may be formed at the busbar frame 30 that faces the first side 11. The lead 13 may be coupled to the busbar.

The busbar frame 30 may include the busbar connecting the battery cells of the battery cell assembly 10 in series or in parallel and electrically connecting them.

The battery module 1 according to Embodiment 1 of the present disclosure may further include a mono frame 40. The mono frame 40 may accommodate the battery cell assembly 10, the heat dissipation layer 20 and the busbar frame 30. The mono frame 40 may have a discharge hole 41 in a lower surface thereof. The discharge hole 41 may include a plurality of discharge holes 41. Sparks or flames in the battery module 1 may be discharged through the discharge holes 41.

In the event of abnormal operation of any battery cell in the battery module 1 due to overcharging, overdischarging and overheating, gases may be produced, and a fire or explosion may occur in the battery cell due to the produced gases. Accordingly, the gases, sparks or flames may be discharged through the discharge holes 41.

The battery module 1 according to Embodiment 1 of the present disclosure may further include a sealing portion 12. To be exact, the sealing portion 12 may be formed at each battery cell of the battery module 1. Each battery cell includes an electrode and it is necessary to seal the electrode. Accordingly, the sealing portion 12 is formed. The sealing portion 12 may seal the battery cells and may be formed on a side that faces the busbar frame 30.

Additionally, a surface on the opposite side to the sealing portion 12 may be a cooling surface 14. The surface on the opposite side to the sealing portion 12 is a smooth surface free of sealing streaks (or protrusions) and has good cooling efficiency and thus may act as the cooling surface 15.

In the case of a conventional battery cell, the cooling surface 15 where the battery cell assembly 10 is cooled and the lead 13 were disposed close to each other. Additionally, conventionally, the heat dissipation layer was present at the lower part of the battery module, and the busbar frame was present at the upper part of the battery module. In this case, the lead 13 of the battery cell was formed at the lower part of the first side close to the cooling surface.

However, in the present disclosure, the heat dissipation layer 20 is present at the upper part of the battery module 1 and the busbar frame 30 is present at the lower part. Accordingly, in configuring the lead 13, the battery module 1 according to Embodiment 1 of the present disclosure may include battery cells upside down. Accordingly, the lead 13 of the battery cell may be formed at the upper part of the first side 11. However, in this case, a space for placing a connector 70 as described below may be insufficient. Accordingly, to solve this problem, Embodiment 1 of the present disclosure may be configured such that the lead 13 of the battery cell is formed at the lower part of the first side 11 close to the sealing portion 12. To this end, the lead 13 may be positioned at a location close to the sealing portion 12 in the battery cell manufacturing step.

The lead 13 is individually welded to a positive electrode tab connected to a positive electrode of the battery cell and to a negative electrode tab connected to a negative electrode.

As described above, the present disclosure may use the battery cell having the lead 13 at the lower part of the first side 11 close to the sealing portion 12. To this end, it may be necessary to change the location of the lead 13 part in a notching process of the battery cell. Additionally, it may be necessary to change the location at which the lead 13 protrudes in a process of making a pouch including the battery cell.

The battery module 1 according to Embodiment 1 of the present disclosure may further include the connector 70. The connector 70 may be disposed at the busbar frame 30. The connector 70 may be formed at a higher position than the location at which the lead 13 is coupled to the busbar frame 30. The connector 70 may electrically connect the battery cell assembly 10 to an external device. The connector 70 may play a role in connecting the charge/discharge function to the external device.

The battery module 1 according to Embodiment 1 of the present disclosure may further include an end plate 80. The end plate 80 may include a pair of end plates 80. The end plates 80 may be coupled at an area corresponding to the first side 11. The end plates 80 may be coupled to the mono frame 40. The end plates 80 and the mono frame 40 may completely cover the battery cell assembly 10 when they are coupled to each other. The end plates 80 and the mono frame 40 may be coupled using a welding method.

The conventional art was designed with a structure in which the heat dissipation layer 20 was formed at the lower part of the battery module 1 to secure and cool the battery cells and sparks or flames were discharged in the upward direction of the battery module 1. However, with the development of technology and the application of the battery module 1 to devices, there is a need for a structure for discharging sparks or flames in the downward direction of the battery module 1. Additionally, when the battery module 1 is applied to a vehicle, for the purpose of safety, there is a need for a structure in which the configuration for discharging sparks or flames in the battery module 1 is designed at the lower part of the vehicle.

The present disclosure is designed to meet the need, and as opposed to the conventional art, the present disclosure includes the heat dissipation layer 20 at the upper part of the battery module 1 and the busbar frame 30 at the lower part. The heat dissipation layer 20 disposed at the upper part may secure and cool the battery cell assembly 10. The busbar frame 30 disposed at the lower part of the battery module 1 includes discharge holes 31, thereby discharging sparks or flames in the battery module 1 in the downward direction.

### Embodiment 2

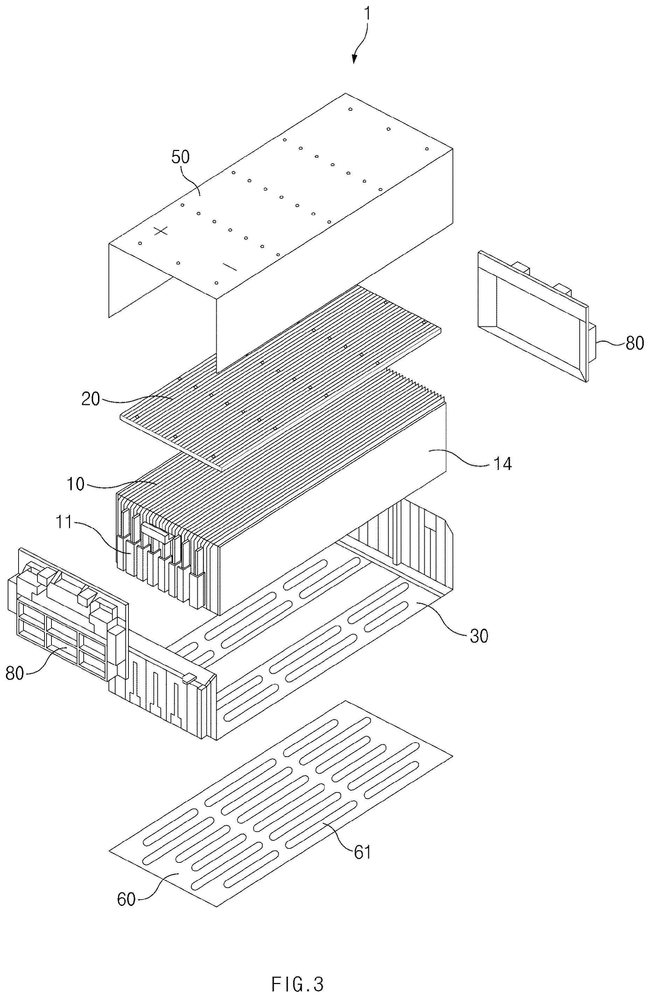

Hereinafter, the battery module according to Embodiment 2 of the present disclosure will be described in detail with reference to FIG. 3.

The Embodiment 2 of the present disclosure may include an upper frame 50 and a lower frame 60, where Embodiment 2 is different from Embodiment 1. The common description in Embodiment 1 and Embodiment 2 is omitted and the difference between Embodiment 1 and Embodiment 2 will be described.

FIG. 3 is an exploded view of the battery module according to Embodiment 2 of the present disclosure.

The battery module 1 according to Embodiment 2 of the present disclosure may further include the upper frame 50 and the lower frame 60.

The upper frame 50 may cover the heat dissipation layer 20 and a second side 14. The second side 14 may be a side of the battery cell assembly 10 in the length direction. The upper frame 50 may be formed in a shape of letter U.

The lower frame 60 may be coupled to the upper frame 50. The lower frame 60 and the upper frame 50 may be coupled by a welding method. The lower frame 60 may have a discharge hole 61. The lower frame 60 may have a plurality of discharge holes 61. Sparks or flames in the battery module 1 may be discharged through the discharge holes 61.

The upper frame 50 and the lower frame 60 may be coupled to the end plates 80 and cover the battery cell assembly 10. The upper frame 50 and the lower frame 60 may be respectively coupled to the end plates 80.

In the same way as the battery module 1 according to Embodiment 1, the battery module 1 according to Embodiment 2 of the present disclosure may have the discharge holes 61 at the lower part of the battery module 1 to discharge sparks or flames in the downward direction and the heat dissipation layer 20 at the upper part to provide the same effect. In the case of Embodiment 2, it may be applied to a structure using a battery module frame that is different from Embodiment 1.

A battery pack may include the battery module 1 according to Embodiment 1 and Embodiment 2 of the present disclosure.

While the present disclosure has been hereinabove described with regard to a limited number of embodiments and drawings, the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Battery module
10: Battery cell assembly
11: First side
12: Sealing portion
13: Lead
20: Heat dissipation layer
30: Busbar frame
40: Mono frame
41, 61: Discharge hole
50: Upper frame
60: Lower frame
70: Connector
80: End plate

## Claims

1. A battery module, comprising:
a battery cell assembly formed by stacking a plurality of battery cells;
a heat dissipation layer disposed on a top side of the battery cell assembly; and
a busbar frame covering a first side where a lead of the battery cell assembly protrudes and a bottom side of the battery cell assembly.

2. The battery module according to claim 1, wherein the heat dissipation layer secures the battery cell assembly.

3. The battery module according to claim 2, further comprising:
a mono frame accommodating the battery cell assembly, the heat dissipation layer and the busbar frame,
wherein a discharge hole is formed in a lower surface of the mono frame.

4. The battery module according to claim 2, further comprising:
an upper frame covering the heat dissipation layer and a second side that is a side of the battery cell assembly in a length direction; and
a lower frame coupled to the upper frame, and having a discharge hole.

5. The battery module according to claim 3 or 4, wherein the battery module comprises a sealing portion on a side that faces the busbar frame to seal the battery cell.

6. The battery module according to claim 5, wherein the lead of the battery cell is formed at a lower part of the first side close to the sealing portion.

7. The battery module according to claim 6, further comprising:
a connector formed at a higher position than a location at which the lead is coupled to the busbar frame.

8. The battery module according to claim 6, further comprising:
an end plate that is coupled to the first side.

9. The battery module according to claim 3, wherein the discharge hole includes a plurality of discharge holes.

10. A battery pack comprising the battery module defined in claim 1.
